# FASCICULE DE BREVET EUROPEEN

(11) **EP 0 728 557 B1**
(45) Date de publication et mention de la délivrance du brevet: **31.10.2001**
(21) Numéro de dépôt: 96400169.7
(22) Date de dépôt: 24.01.1996
(51) Int. Cl.: B23P 19/02, B25B 27/02, B25B 27/06, F15B 15/20

(54) **Dispositif d'emmanchement d'une pièce dans un logement d'une pièce réceptrice**
Vorrichtung zum Eindrücken eines Werkstückes in einem Sitz eines Empfangswerkstückes
Device for press-fitting a workpiece in a lodging of a receiving workpiece

(30) Priorité: 24.02.1995 FR 9502206
(43) Date de publication de la demande: 28.08.1996
(73) Titulaire: AUTOMOBILES PEUGEOT, 75116 Paris (FR); AUTOMOBILES CITROEN, 92200 Neuilly-sur-Seine (FR)
(72) Inventeur: Dousse, Pascal, F-68200 Mulhouse (FR); Grillot, Denis, F-25250 Rang (FR)
(74) Mandataire: Lanceplaine, Jean-Claude

(56) Documents cités:
- DE-A- 1 577 091
- FR-A- 2 331 701
- FR-A- 2 490 130
- GB-A- 2 143 760
- US-A- 5 090 296
- PATENT ABSTRACTS OF JAPAN vol. 15, no. 362 (M-1157), 12 Septembre 1991 & JP-A-03 142132 (TANAKA KIKINZOKU KOGYO KK), 17 Juin 1991,
- PATENT ABSTRACTS OF JAPAN vol. 7, no. 137 (M-222), 15 Juin 1983 & JP-A-58 051025 (FUJI CONTROLS), 25 Mars 1983,
- PATENT ABSTRACTS OF JAPAN vol. 16, no. 405 (M-1301), 26 Août 1992 & JP-A-04 135130 (NISSAN MOTOR CO), 8 Mai 1992,
- PATENT ABSTRACTS OF JAPAN vol. 13, no. 36 (M-790), 26 Janvier 1989 & JP-A-63 245335 (MURATA MFG CO LTD), 12 Octobre 1988,

## Description

La présente invention a pour objet un dispositif d'emmanchement d'une pièce dans un logement d'une pièce réceptrice.

Dans certaines applications industrielles comme par exemple l'industrie automobile, des pièces sont emmanchées à force dans des logements prévus dans d'autres pièces.

C'est le cas, par exemple de l'emmanchement de bouchons ou de l'emmanchement des guides ou des sièges de soupapes dans une culasse de moteur.

Pour cela, on utilise une broche supportant la pièce à emmancher et reliée à un mécanisme destiné à exercer sur ladite broche un effort déterminé.

Mais, pour contrôler la fourchette d'efforts prévus pour un emmanchement, les mécanismes utilisés jusqu'à présent nécessitent l'intégration dans la broche d'un capteur d'effort relié à un système d'enregistrement des efforts et de validation du cycle d'emmanchement si les efforts exercés sur la pièce sont dans la gamme d'efforts souhaités.

On connaît dans le brevet GB-A-2 143 760 un dispositif d'emmanchement d'une pièce dans un logement d'une pièce réceptrice, comprenant un vérin hydraulique à double piston et une broche destinée à recevoir à l'une de ses extrémités un vérin hydraulique à double piston. Ce vérin permet d'exercer sur la broche une première partie de course avec un effort minimum pour mettre en contact la pièce contre le logement de la pièce réceptrice sans emmanchement et une seconde partie de course avec un effort maximum pour emmancher à force ladite pièce dans le logement de la pièce réceptrice.

L'invention a pour but de proposer un dispositif d'emmanchement d'une pièce dans un logement d'une pièce réceptrice fonctionnant dans une large gamme d'efforts prédéfinis et maîtrisés et cela sans ajout d'un quelconque capteur d'effort.

L'invention a donc pour objet un dispositif d'emmanchement d'une pièce dans un logement d'une pièce réceptrice, ledit dispositif comprenant, d'une part, une broche destinée à recevoir à l'une de ses extrémités la pièce à emmancher et reliée à l'autre de ses extrémités à un vérin hydraulique à double piston et, d'autre part, un organe de mesure de déplacement de la broche, ledit vérin hydraulique exerçant sur ladite broche une première partie de course avec un effort minimum pour mettre en contact la pièce contre le logement de la pièce réceptrice sans emmanchement et une seconde partie de course avec un effort maximum pour emmancher à force ladite pièce dans le logement de la pièce réceptrice et comportant, dans un corps, un premier piston fixe et un second piston monté coulissant sur le premier piston, l'extrémité libre du premier piston formant avec un alésage ménagé dans le second piston une première surface utile correspondant à l'effort minimum à obtenir et l'extrémité du second piston opposée à celle destinée à recevoir la broche formant une seconde surface utile correspondant à l'effort maximum à obtenir.

Selon des caractéristiques préferées de l'invention :
- le vérin hydraulique comporte, d'une part, un premier circuit d'arrivée de fluide sous pression ménagé dans le premier piston et débouchant au niveau de la première surface utile et, d'autre part, un second circuit d'arrivée de fluide sous pression ménagé dans le corps et débouchant au niveau de la seconde surface utile,
- l'effort minimum est de l'ordre de 50 daN et l'effort maximum est de l'ordre 5000 daN,
- le dispositif comporte des moyens de maintien de la pièce à emmancher sur l'extrémité libre de la broche pendant le déplacement de ladite broche,
- les moyens de maintien de la pièce à emmancher sont formés par un canal ménagé dans la broche et débouchant au niveau de l'extrémité libre de ladite broche, ledit canal étant relié à des moyens d'aspiration.

D'autres caractéristiques préferées et avantages de l'invention apparaîtront au cours de la description qui va suivre, donnée à titre d'exemple et faite en référence aux dessins annexés, sur lesquels :
- la Fig. 1 est une vue schématique en élévation d'un dispositif d'emmanchement conforme à l'invention,
- la Fig. 2 est une vue schématique en coupe du vérin hydraulique à double piston du dispositif d'emmanchement conforme à l'invention,
- la Fig. 3 est une vue schématique en élévation montrant un exemple d'application du dispositif d'emmanchement conforme à l'invention.

Sur les figures, on a représenté un dispositif d'emmanchement d'une pièce dans un logement d'une pièce réceptrice, comme par exemple l'emmanchement des bouchons ou des guides et des sièges de soupapes dans les culasses de moteurs de véhicules automobiles.

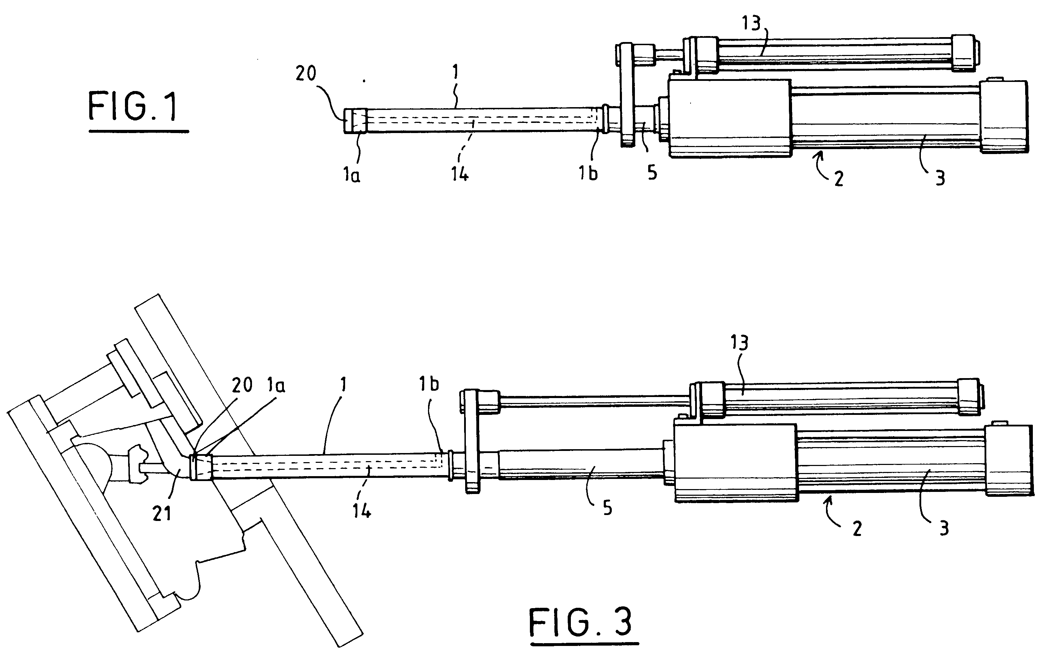

Ainsi que représenté sur la Fig. 1, le dispositif d'emmanchement comprend une broche 1 destinée à recevoir à l'une la de ses extrémités une pièce 20 à emmancher.

La broche 1 est reliée à l'autre 1b de ses extrémités à un vérin hydraulique à double piston, désigné dans son ensemble par la référence 2, et exerçant sur ladite broche 1 une première partie de course avec un effort minimum et une seconde partie de course avec un effort maximum.

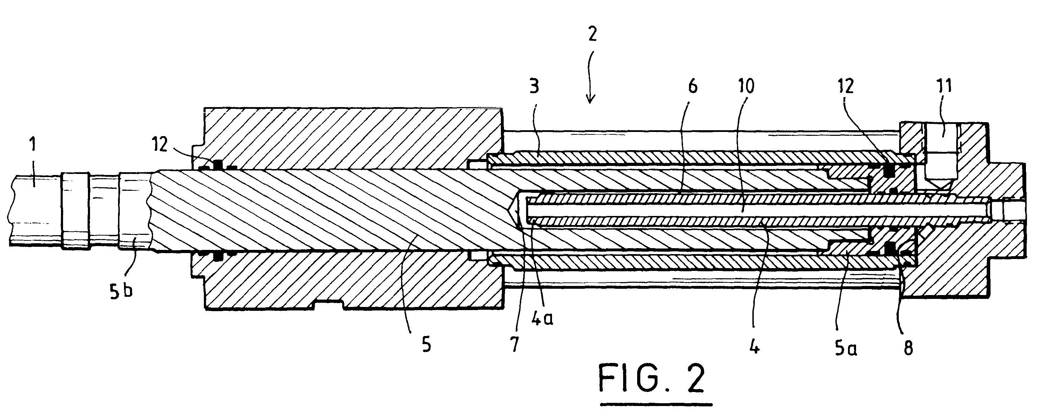

Pour cela et comme représenté à la Fig. 2, le vérin hydraulique 2 comporte, dans un corps 3, un premier piston fixe 4 et un second piston 5 de section plus importante que le premier piston 4 et monté coulissant sur ledit premier piston 4.

A cet effet, le second piston 5 comporte un alésage 6 dans lequel pénètre le premier piston 4 dont l'extrémité 4a forme avec l'alésage 6 une première surface utile 7 correspondant à l'effort minimum à exercer sur la broche 1.

D'autre part, l'extrémité 5a du second piston 5 opposée à celle 5b supportant la broche 1 forme une seconde surface utile 8 de plus grande section que la première surface utile 7 et correspondant à l'effort maximum à exercer sur la broche 1.

Le vérin hydraulique 2 comporte un premier circuit 10 d'arrivée de fluide sous pression, comme par exemple de l'huile, ménagé dans le premier piston 4 et débouchant au niveau de la première surface utile 7 et un second circuit 11 d'arrivée également de fluide sous pression, comme par exemple de l'huile, ménagé dans le corps 3 et débouchant au niveau de la seconde surface utile 8.

Des joints d'étanchéité 12 sont interposés entre, d'une part, les pistons 4 et 5 et, d'autre part, le second piston 5 et le corps 3.

Ainsi que représenté sur la Fig. 1, le dispositif comporte un organe 13 de mesure du déplacement de la broche 1 qui, dans l'exemple représenté, est constitué par un vérin pneumatique avec ses fins de course.

Cet organe 13 peut également être constitué par exemple par une règle multipistes ou un capteur magnétostrictif.

De plus, le dispositif comporte des moyens de maintien de la pièce 20 à emmancher sur l'extrémité 1a de la broche 1.

Ces moyens sont formés par exemple par un canal 14 (Fig. 1) ménagé dans la broche 1 et débouchant au niveau de l'extrémité libre la de ladite broche 1.

Ce canal 14 est relié à des moyens d'aspiration, non représentés.

A la Fig. 3, on a représenté un exemple d'application du dispositif d'emmanchement conforme à l'invention.

Dans cet exemple, la pièce 20 est constituée par un siège de soupape à emmancher dans une culasse 21 d'un moteur.

Tout d'abord, la pièce 21 est positionnée sur l'extrémité la de la broche 1 par un mécanisme automatique approprié, non représenté, et est maintenue sur cette extrémité la par l'aspiration créée dans le canal 14.

Ensuite, le premier circuit 10 est alimenté en fluide sous pression et ce fluide sous pression agit sur la première surface utile 7 ce qui a pour effet de déplacer le piston 5 et la broche 1 sur une première partie de course avec un effort minimum.

Au cours de cette première partie de course, la pièce 20 est mise en contact avec le logement de la culasse 21, destiné à recevoir cette pièce 20.

Cet effort minimum est utilisé pour contrôler que l'emmanchement de la pièce 20 ne peut se produire à cet effort minium.

Si, l'emmanchement de la pièce 20 se produit avec cet effort minimum, la pièce 20 est donc mauvaise et elle est rejetée.

Par contre, si l'emmanchement n'est pas réalisé avec cet effort minimum, le cycle est poursuivi.

Pour cela, le second circuit 11 est alimenté en fluide sous pression et ce fluide sous pression agit sur la seconde surface utile 8 ce qui a pour effet de déplacer le piston 5 et la broche 1 sur une seconde partie de course avec un effort maximum.

Si la course totale d'emmanchement mesurée par l'organe 13 est atteinte, la pièce 20 est considérée comme bonne.

Par contre, si la course totale d'emmanchement n'est pas atteinte, la pièce 20 est considérée comme mauvaise et est rejetée.

La valeur de l'effort minimum est dimensionnée par la pression de fluide sur la première surface utile 7 et la valeur de l'effort maximum est donnée par la pression de fluide sur la seconde surface utile 8.

Par exemple, l'effort minimum est de l'ordre de 50 daN et l'effort maximum est de 5000 daN. Ces valeurs sont données à titre indicatif et elles dépendent des diamètres des pistons 4 et 5.

Ainsi, les diamètres des pistons 4 et 5 peuvent être adaptés en fonction des efforts désirés ce qui permet, grâce à la modularité de ces pistons, d'obtenir des gammes d'effort minimum et maximum souhaitées et maîtrisées en fonction également des pressions d'alimentation en fluide des circuits 10 et 11.

Lors de la course de la broche 1 réalisée avec l'effort minimum, c'est à dire lors de la première partie de course, les pièces 20 à emmancher peuvent être saisies au "défilé" ce qui permet d'éviter l'utilisation d'un mouvement particulier de préhension des pièces 20.

Le dispositif d'emmanchement selon l'invention présentent l'avantage d'éviter l'emploi de capteurs d'effort associés au vérin et de minimiser la consommation de fluide grâce au bon rapport des surfaces utiles des pistons.

## Revendications

1. Dispositif d'emmanchement d'une pièce (20) dans un logement d'une pièce réceptrice, ledit dispositif comprenant, d'une part, une broche (1) destinée à recevoir à l'une (1a) de ses extrémités la pièce (20) à emmancher et reliée à l'autre (1b) de ses extrémités à un vérin hydraulique (2) à double piston et, d'autre part, un organe (13) de mesure du déplacement de la broche (1), ledit vérin hydraulique exerçant sur ladite broche une première partie de course avec un effort minimum pour mettre en contact la pièce (20) contre le logement de la pièce réceptrice sans emmanchement et une seconde partie de course avec un effort maximum pour emmancher à force ladite pièce (20) dans le logement de la pièce réceptrice et comportant, dans un corps (3), un premier piston (4) fixe et un second piston (5) monté coulissant sur le premier piston (4), l'extrémité libre (4a) du premier piston (4) formant avec un alésage (6) ménagé dans le second piston (5) une première surface utile (7) correspondant à l'effort minimum à obtenir et l'extrémité (5a) du second piston (5) opposée à celle (5b) destinée à recevoir la broche (1) formant une seconde surface utile (8) correspondant à l'effort maximum à obtenir.

2. Dispositif selon les revendications 1, **caractérisé en ce que** le vérin hydraulique (2) comporte, d'une part, un premier circuit (10) d'arrivée de fluide sous pression ménagé dans le premier piston (4) et débouchant au niveau de la première surface utile (7) et, d'autre part, un second circuit (11) d'arrivée de fluide sous pression ménagé dans le corps (3) et débouchant au niveau de la seconde surface utile (8).

3. Dispositif selon les revendications 1 et 2, **caractérisé en ce que** l'effort minimum est de l'ordre de 50 daN et l'effort maximum est de l'ordre de 5000daN.

4. Dispositif selon l'une quelconque des revendications 1 à 3, **caractérisé en ce qu'**il comporte des moyens (14) de maintien de la pièce (20) sur l'extrémité libre (1a) de la broche (1) pendant le déplacement de ladite broche (1).

5. Dispositif selon la revendication 4, **caractérisé en ce que** les moyens de maintien de la pièce (20) sont formés par un canal (14) ménagé dans la broche (1) et débouchant au niveau de l'extrémité libre (1a) de ladite broche (1), ledit canal (14) étant relié à des moyens d'aspiration.

## Patentansprüche

1. Vorrichtung zum Eindrücken eines Werkstücks (20) in einen Sitz eines Empfangswerkstücks, die einerseits einen Dorn (1) aufweist, der dazu bestimmt ist, an einem (1a) seiner Enden das einzudrückende Werkstück (20) aufzunehmen, und am anderen (1b) seiner Enden mit einem Hydraulikzylinder (2) mit doppeltem Kolben verbunden ist, und andererseits ein Organ (13) zum Messen der Bewegung des Dorns (1) aufweist, wobei der Hydraulikzylinder auf den Dorn in einem ersten Hubteil eine Mindestkraft ausübt, um das Werkstück (20) mit dem Sitz des Empfangswerkstücks ohne Eindrücken in Kontakt zu bringen, sowie einen zweiten Hubteil mit einer Höchstkraft, um das Werkstück (20) in den Sitz des Empfangswerkstücks einzupressen, und in einem Körper (3) einen ersten feststehenden Kolben (4) und einen zweiten, auf dem ersten Kolben (4) verschiebbar montierten Kolben (5) aufweist, wobei das freie Ende (4a) des ersten Kolbens (4) mit einer im zweiten Kolben (5) vorgesehenen Bohrung (6) eine erste Nutzfläche (7) bildet, die der zu erzeugenden Mindestkraft entspricht, und das Ende (5a) des zweiten Kolbens (5), das dem zur Aufnahme des Dorns (1) bestimmten Ende (5b) entgegengesetzt ist, eine zweite Nutzfläche (8) bildet, die der zu erzeugenden Höchstkraft entspricht.

2. Vorrichtung nach Anspruch 1, **dadurch gekennzeichnet, dass** der Hydraulikzylinder (2) einerseits einen ersten Druckfluidzufuhrkreis (10), der im ersten Kolben (4) vorgesehen ist und auf Höhe der ersten Nutzfläche (7) ausmündet, und andererseits einen zweiten Druckfluidzufuhrkreis (11) aufweist, der im Körper (3) vorgesehen ist und auf Höhe der zweiten Nutzfläche (8) ausmündet.

3. Vorrichtung nach den Ansprüchen 1 und 2, **dadurch gekennzeichnet, dass** die Mindestkraft etwa 50 daN und die Höchstkraft etwa 5000 daN beträgt.

4. Vorrichtung nach einem der Ansprüche 1 bis 3, **dadurch gekennzeichnet, dass** sie Mittel (14) zum Halten des Werkstücks (20) auf dem freien Ende (1a) des Dorns (1) während der Bewegung des Dorns (1) aufweist.

5. Vorrichtung nach Anspruch 4, **dadurch gekennzeichnet, dass** die Mittel zum Halten des Werkstücks (20) von einem in dem Dorn (1) vorgesehenen Kanal (14) gebildet sind, der auf Höhe des freien Endes (1a) des Dorns (1) ausmündet und mit einer Saugeinrichtung verbunden ist.

## Claims

1. A device for fitting a part (20) into a housing of a receiving component, the said device comprising, on the one hand, a rod (1) which is designed to receive, at one (1a) of its ends, the part (20) to be fitted and which, at the other (1b) of its ends, is connected to a double-piston hydraulic ram (2), and comprising, on the other hand, means (13) for measuring the movement of the rod (1), the said hydraulic ram exercising on the said rod a first stroke portion with a minimum force to bring the part (20) to rest against the housing of the receiving component without fitting taking place and a second stroke portion with a maximum force to press-fit the said part (20) into the housing of the receiving component and comprising, in a body (3), a stationary first piston (4) and a second piston (5) mounted so as to slide on the first piston (4), the free end (4a) of the first piston (4) forming with a bore (6) provided in the second piston (5) a first effective area (7) corresponding to the minimum force to be produced, and the end (5a) of the second piston (5), opposite to the end (5b) designed to receive the rod (1), forming a second effective area (8) corresponding to the maximum force to be produced.

2. A device according to Claim 1, **characterised in that** the hydraulic ram (2) comprises, on the one hand, a first incoming pressurised fluid circuit (10) provided in the first piston (4) and opening at the first effective area (7) and, on the other hand, a second incoming pressurised fluid circuit (11) provided in the body (3) and opening at the second effective area (8).

3. A device according to Claims 1 and 2, **characterised in that** the minimum force is of the order of 50 daN and the maximum force is of the order of 5000 daN.

4. A device according to any one of Claims 1 to 3, **characterised in that** it comprises means (14) for holding the part (20) on the free end (1a) of the rod (1) during movement of the said rod (1).

5. A device according to Claim 4, **characterised in that** the means for holding the part (20) are formed by a duct (14) provided in the rod (1) and opening at the free end (1a) of the said rod (1), the said duct (14) being connected to suction means.
